# EUROPÄISCHE PATENTSCHRIFT

(11) **EP 3 444 211 B1**
(45) Veröffentlichungstag und Bekanntmachung des Hinweises auf die Patenterteilung: **28.04.2021**
(21) Anmeldenummer: 17186267.5
(22) Anmeldetag: 15.08.2017
(51) Int. Cl.: B65H 3/08, B65B 43/18, B65H 3/54

(54) **VEREINZELUNGSVORRICHTUNG FÜR FLÄCHENGEBILDE, INSBESONDERE VENTILSÄCKE**
SEPARATING DEVICE FOR FLEXIBLE SHEET MATERIAL, IN PARTICULAR VALVE SACKS
DISPOSITIF DE SÉPARATION POUR STRUCTURES PLANES, EN PARTICULIER SACHETS À SOUPAPE

(43) Veröffentlichungstag der Anmeldung: 20.02.2019
(73) Patentinhaber: BEUMER Group GmbH & Co. KG, 59269 Beckum (DE)
(72) Erfinder: Haurenherm, Andreas, 59269 Beckum (DE); Tellen, Marc, 48291 Telgte (DE); Rotärmel, Waldemar, 59269 Beckum (DE)
(74) Vertreter: Philipp, Matthias

(56) Entgegenhaltungen:
- EP-A1- 0 111 739
- EP-A2- 2 455 288
- FR-A1- 2 940 260
- JP-A- 2005 132 634
- US-A- 4 223 883

## Beschreibung

Die vorliegende Erfindung betrifft eine Vereinzelungsvorrichtung zum Vereinzeln von ebenen, flexiblen, insbesondere rechteckigen Flächengebilden, insbesondere von Ventilsäcken, von einem Stapel.

Aus dem Stand der Technik sind Anlagen zum Vereinzeln von Ventilsäcken bekannt, die eine Aufnahmeeinrichtung wie etwa einen Sauger nutzen, um den obersten Sack von einem auf einer Aufnahmefläche positionierten Sackstapel zu erfassen, anzuheben und so zu separieren. Insbesondere Sackstapel mit wenigen Säcken weisen dabei eine geringe Steifigkeit auf, so dass die Gefahr besteht, dass nicht nur der oberste Sack angehoben wird, sondern auch die darunter liegenden Säcke, die dann verrutschen können und nicht mehr in der optimalen Aufnahmeposition liegen Eine Anlage ist z. B. in der EP 0 111 739 A1 offenbart.

Mit der vorliegenden Erfindung soll eine Vereinzelungsvorrichtung bereitgestellt werden, die in der Lage ist, mit großer Geschwindigkeit Flächengebilde bzw. Ventilsäcke aus einem Stapel zu vereinzeln, ohne dass es zu den beschriebenen Problemen kommt.

Erfindungsgemäß wird diese Aufgabe durch eine Vereinzelungsvorrichtung zum Vereinzeln von ebenen, flexiblen Flächengebilden bzw. Ventilsäcken von einem Stapel gelöst, welche die folgenden Komponenten aufweist:
- einen Vereinzelungsplatz mit einer Auflagefläche zur Aufnahme eines Stapels;
- eine Greifeinrichtung zum Erfassen eines obersten Flächengebildes und Abheben von dem Stapel;
- eine Halteeinrichtung mit einem Niederhalteelement, das mit einer vorgebbaren, gegen die Auflagefläche gerichteten Niederhaltekraft gegen einen Niederhaltebereich einer Oberseite des obersten Flächengebildes bringbar ist, und mit einem Haftelement, das in einem dem Niederhalteelement gegenüberliegenden Bereich der Auflagefläche angeordnet ist. Das Haftelement ist ausgebildet, um bei gegen das oberste Flächengebilde drückendem Niederhalteelement eine zusätzliche Haftkraft auf eine Unterseite eines untersten, auf der Auflagefläche aufliegenden Flächengebildes auszuüben.

Unter der zusätzlichen Haftkraft wird eine Haftkraft verstanden, die zusätzlich zu der ohnehin aufgrund des Kontakts des untersten Flächengebildes mit der Auflagefläche vorhandenen Haftkraft in Form einer Haft- oder Gleitreibungskraft erzeugt wird. Eine zusätzliche Haftkraft kann, wie noch im einzelnen erläutert wird, beispielsweise durch die Ausbildung des Haftelements als Element mit erhöhtem Reibungskoeffizienten und/oder durch Ausbildung als Saugelement erfolgen, wodurch das unterste Flächengebilde verstärkt gegen die Auflagefläche angedrückt wird und dadurch eine zusätzliche Haftkraft in Form einer Haftreibungs- oder Gleitreibungskraft erzeugt wird.

Die Greifeinrichtung ist zum Herausziehen des obersten Flächengebildes unter dem Niederhalteelement und zum Anheben des Flächengebildes ausgebildet.

Die vorliegende Erfindung ermöglicht das Anheben eines Flächengebildes oder Ventilsackes von einem Stapel mit hoher Geschwindigkeit, ohne dass dabei die darunterliegenden Ventilsäcke verrutschen oder mit angehoben werden, selbst wenn der Stapel nur noch aus wenigen Ventilsäcken besteht. Bevorzugt wird die Vereinzelungsvorrichtung zum Vereinzeln von Ventilsäcken genutzt, die anschließend mit einer Aufsteckeinrichtung auf einen Befüllstutzen aufgeschossen werden. In dem genannten Fall ist die Vereinzelungsvorrichtung Teil einer Abfüllanlage für Ventilsäcke.

Die Ventilsäcke können in einer bestimmten Art und Weise gefaltet sein. Bevorzugt sind zwei gegenüberliegende Kanten so gefaltet, dass die Bereiche, die im ausgefalteten Zustand den Boden und die Decke des Sackes bilden, umgeklappt sind und flach am restlichen Sack anliegen. Vorzugsweise werden die Säcke mit den umgefalteten Enden nach oben in die Vereinzelungsvorrichtung eingebracht.

Zu einer definierten Positionierung des Stapels auf der Auflagefläche des Vereinzelungsplatzes können zwei Anschläge vorgesehen sein, an denen Seitenkanten der Flächengebilde bzw. des Stapels anliegen. Die beiden Anschläge liegen zweckmäßigerweise an Seitenkanten, die rechtwinklig zueinander sind. Insbesondere kann ein Anschlag als Positionieranschlag ausgebildet sein und in seiner Längsausrichtung parallel zu einer Zuführrichtung des Sackstapels angeordnet sein. Die Zuführrichtung des Sackstapels stellt dabei die Bewegungsrichtung dar, in der der Sackstapel auf die Auflagefläche des Vereinzelungsplatzes zugeführt wird. Der zweite Anschlag kann ein Stoppanschlag sein, der orthogonal zum Positionieranschlag angeordnet ist und die Bewegung des Sackstapels in Zuführrichtung definiert stoppt. Bevorzugt ist die Zuführrichtung senkrecht zu einer Bewegungsrichtung, in der die Säcke aufgeschossen werden.

Beide Anschläge können als separate Bauteile ausgeführt sein, in den Vereinzelungsplatz integriert sein oder Teil einer Transporteinheit zum Transportieren des Sackstapels sein.

Die Greifeinrichtung dient dazu, den obersten Ventilsack des Stapels anzuheben und ihn so zu separieren. Ein entsprechend vereinzelter Sack wird von der Greifeinrichtung in eine Position bewegt, in der der Sack von einer weiteren Einrichtung aufgenommen werden kann, um weitere Handhabungsschritte des Aufschießvorgangs zu durchlaufen.

Beim Erfassen des obersten Ventilsackes durch die Greifeinrichtung befinden sich der oberste Sack und die Aufnahmeeinheit in einer Aufnahmeposition. Die Aufnahmeposition des obersten Sackes ist dabei durch die beiden Anschläge bestimmt. Die Aufnahmeposition der Greifeinrichtung bestimmt sich durch die Aufnahmeposition des obersten Sackes. Die Greifeinrichtung kann den obersten Sack an einem der Enden des Sackes, insbesondere an einem oberen Ende des Sackes, an dem sich ein Ventil zum Befüllen des Sackes befindet, erfassen. Bevorzugt hat die Greifeinrichtung zwei Greifelemente, mit denen ein Ventilsack an einem oberen Ende, an dem sich das Ventil befindet, und gleichzeitig an einem gegenüberliegenden unteren Ende erfasst werden kann. Das obere Ende liegt in der Aufnahmeposition an einem der Anschläge an, bevorzugt am Stoppanschlag.

Bei der Übergabe des Sackes von der Greifeinrichtung an eine weitere Einrichtung für weitere Handhabungsschritte befinden sich der vereinzelte Sack und die Greifeinrichtung in einer Übergabeposition. Durch das Anheben des obersten bzw. vereinzelten Sackes wird der oberste bzw. vereinzelte Sack von einer horizontalen in eine geneigte oder zumindest teilweise vertikale Position bewegt. In der Übergabeposition befindet sich der vereinzelte Sack entsprechend in einer zumindest teilweise vertikalen Position. Dabei kann ein Abknickblech vorgesehen sein, das dem vereinzelten Sack in der Übergabeposition an einer Stelle einen Abknickwinkel aufzwingt. Insbesondere kann der Abknickwinkel 90° betragen, so dass der vereinzelte Sack in der Übergabeposition einen vertikalen Sackabschnitt und einen horizontalen Sackabschnitt aufweist. Die Greifelemente befinden sich beiderseits des Abknickblechs.

Die Halteeinrichtung verhindert das Verrutschen von anderen Säcken des Stapels beim Anheben des obersten Sackes des Stapels. Dazu weist die Halteeinrichtung ein Haftelement und ein Niederhalteelement auf. Das Haftelement erzeugt dabei eine zusätzliche oder erhöhte Haftkraft auf den Stapel, insbesondere auf die Unterseite des untersten Sacks des Stapels, so dass ein Verrutschen des Stapels verhindert wird. Über das Niederhalteelement ist eine Niederhaltekraft auf den Stapel aufbringbar. Die Niederhaltekraft erhöht damit einerseits die Haft- oder Reibkraft zwischen den einzelnen Säcken des Stapels und andererseits die Haftkraft, die vom Haftelement auf den Stapel, insbesondere den untersten Sack des Stapels, ausgeübt wird. Damit durch die Niederhaltekraft eine möglichst große Normalkraft zwischen Haftelement und Sackstapel entsteht, können sich die Niederhaltebereiche, also der oder die Kontaktpunkt(e) zwischen dem Niederhalteelement und dem obersten Sack, jeweils auf einer senkrecht zu der Auflagefläche verlaufende Linie befinden, die durch jeweils ein Haftelement verläuft.

Bevorzugt ist das Niederhalteelement um eine parallel zur Auflagefläche angeordnete Schwenkachse schwenkbar gelagert. Alternativ kann das Niederhalteelement an einer senkrecht zur Auflagefläche ausgerichteten Führung gehalten sein, so dass es geradlinig auf und ab bewegbar ist. Die Niederhaltekraft des Niederhalteelements kann durch eine Gewichtskraft, eine Federkraft und/oder eine motorisch erzeugte Kraft und/oder einen pneumatischen oder hydraulischen Zylinder hervorgerufen werden.

In einer bevorzugten Ausführungsform der Erfindung weist das Niederhalteelement der Vereinzelungsvorrichtung zwei Niederhaltearme auf, welche auf den obersten Sack des Sackstapels drücken. Die Niederhaltearme können als Finger ausgeführt sein, die um eine Schwenkachse schwenkbar gelagert sind, wie oben beschrieben. Es können mehr oder weniger als zwei Niederhaltearme vorgesehen sein, wobei bevorzugt jedem Niederhaltearm ein Haftelement zugeordnet ist.

In einer bevorzugten Ausführungsform der Erfindung ist das zumindest eine Haftelement in den Vereinzelungsplatz integriert. Insbesondere schließt das zumindest eine Haftelement im Wesentlichen eben oder bündig mit der Auflagefläche des Vereinzelungsplatzes ab, so dass beim Zuführen des Sackstapels der Sackstapel über das zumindest eine Haftelement gleiten kann, ohne dass einzelne Säcke am Haftelement hängen bleiben.

In einer weiteren bevorzugten Ausführungsform der Erfindung ist der Sackstapel in einer Zuführrichtung auf die Auflagefläche des Vereinzelungsplatzes der Vereinzelungsvorrichtung zuführbar, wobei die Haftelemente in Zuführrichtung gesehen am Ende der Auflagefläche angeordnet sind, bevorzugt unmittelbar benachbart zu einem der Anschläge, so dass der Sackstapel bei einer Zuführung erst am Ende des Zuführvorgangs durch die Haftelemente gebremst wird, wenn überhaupt.

Um einen Sackstapel auf die Auflagefläche der Vereinzelungsvorrichtung zu befördern, kann eine Zuführeinrichtung vorgesehen sein, die ein in der Ebene der Auflagefläche in einer Zuführrichtung bewegbares Schiebeelement aufweist. Das Schiebeelement hat bevorzugt eine Höhe, die mindestens so groß ist wie eine Höhe eines zugeführten Stapels. Das Schiebeelement kann gegen den Stapel anliegen oder angedrückt sein, während einzelne Flächengebilde entnommen werden. Das Schiebeelement ist parallel zu einem der Anschläge angeordnet.

In einer bevorzugten Ausführungsform der Erfindung ist das zumindest eine Haftelement der Vereinzelungsvorrichtung ein Reibelement bspw. aus Gummi, Kork und/oder Kunststoff, ein stoffschlüssig in die Auflagefläche integrierter Abschnitt mit einer Oberfläche mit hohem Reibungskoeffizienten und/oder ein Saugelement.

Handelt es sich um ein an- oder ausschaltbares Haftelement, wie zum Beispiel ein Saugelement, kann das Haftelement während des Zuführvorgangs ausgeschaltet sein und während des Vereinzelungsvorgangs eingeschaltet sein. Zu diesem Zweck ist auch der Einsatz von Reibelementen möglich, die während der Zuführung in die Auflagefläche versenkt, und während des Vereinzelns der Säcke hochgefahren sind. Alternativ kann die Zuführeinrichtung auch über ein Aufnahmemittel verfügen, in dem ein Stapel aufgenommen ist und mit dem der Stapel bewegt wird und in dem das zumindest eine Haftelement integriert ist.

In einer bevorzugten Ausführungsform der Erfindung besitzt die Greifeinrichtung zwei gleiche oder unterschiedliche Greifelemente, jeweils gebildet durch ein Saugelement, einen Klemmgreifer, einen Nadelgreifer und/oder einen elektrostatischen Aufnehmer.

Weiterhin kann eine Vereinzelungsvorrichtung, wie oben beschrieben, in einer Aufsteckeinrichtung für Ventilsäcke genutzt werden, wobei sie zusätzlich ein Transportelement mit einem relativ dazu bewegbarem Andrückelement aufweist, wobei ein vereinzelter Ventilsack in der Übergabeposition durch Bewegen des Andrückelements gegen das Transportelement klemmend zu halten ist. Insbesondere kann das Andrückelement der Aufsteckeinrichtung ein ortsfestes erstes Andrückelement und ein schwenkbares zweites Andrückelement aufweisen, wobei das schwenkbare Andrückelement um eine Schwenkachse vom Transportelement weg und auf das Transportelement zu schwenkbar ist, um den vereinzelten Sack klemmend zu halten. Das Andrückelement und das Transportelement dienen dazu, den klemmend gehaltenen Sack weiter zu transportieren und zum Aufschießen zu beschleunigen. Dazu können das Andrück- und/oder das Transportelement einen umlaufenden Transportgurt oder mehrere in Reihe angeordnete Rollen aufweisen, welche den eingeklemmten Sack durch Rotation beschleunigen können. Bevorzugt verlauften die Längsachsen des Andrückelements und des Transportelements parallel zu einer Kopfkante des vereinzelten Sackes, so dass die Beschleunigung des vereinzelten Sackes entlang dieser Längsachse erfolgt. Das schwenkbare Andrückelement ist bevorzugt zumindest genauso lang wie der zu haltende Sack. Die Schwenkachse, um die das schwenkbare Andrückelement schwenkbar ist, kann parallel zu der Längsachse des Andrückelements verlaufen.

In einer weiteren bevorzugten Ausführungsform der Erfindung weist die Aufsteckeinrichtung einen Führungskanal mit einem ersten, feststehenden Führungselement und einem zweiten, bewegbaren Führungselement auf, wobei ein Sackende mit Ventilöffnung in der Übergabeposition von der Aufnahmeeinheit im Führungskanal positionierbar ist. Der Führungskanal kann durch eine Aufklappbewegung zu öffnen sein, so dass ein Ende des vereinzelten Sackes dem Führungskanal zuführbar ist. Bevorzugt ist die Längsachse des Führungskanals parallel zur Längsachse des Andrückelements und des Transportelements. So kann der Führungskanal als Führung für die durch das Transport- und/oder das Andrückelement verursachte Bewegung des Sackes genutzt werden.

Bereits durch das Anheben des Sackendes des Sackes kann es zu einem Entfalten des entsprechenden Sackendes kommen. Der Führungskanal kann für eine weitere Entfaltung des entsprechenden Sackendes sowie für die Führung des Ventils genutzt werden. Ein vollständiges Entfalten des entsprechenden Sackendes kann notwendig sein, damit das Ventil des Sackes sich in einer definierten und offenen Position befindet, um auf einen Befüllstutzen aufsteckbar zu sein.

Bevorzugt wird die Aufsteckeinrichtung in einer Sackbefüllungsanlage zum Befüllen von Säcken verwendet, wobei die Sackbefüllungsanlage einen Befüllstutzen aufweist, auf den/über den der Sack aufgeschossen und befüllt werden kann.

Weiterhin umfasst die Erfindung ein Verfahren zum Vereinzeln von Flächengebilden oder Ventilsäcken mit einer Vereinzelungsvorrichtung wie oben beschrieben, wobei das Verfahren zumindest die folgenden Schritte aufweist:
- Positionieren eines Stapels von Flächengebilden in einer Aufnahmeposition auf der Auflagefläche, wobei zwei rechtwinklig zueinander stehende Seitenkanten der Flächengebilde an jeweils einem Anschlag anliegen können;
- Einklemmen des Stapels zwischen dem Niederhalteelement, der Auflagefläche und dem Haftelement durch Bewegen des Niederhalteelements gegen den Niederhaltebereich;
- Erfassen des obersten Flächengebildes und Abheben von dem Stapel.

Bevorzugt wird das oberste Flächengebilde zunächst aus seiner von dem Niederhalteelement gehaltenen Position in einer parallel zur Auflagefläche gerichteten Bewegung herausgezogen und dann angehoben.

In einer bevorzugten Ausführungsform ist das Verfahren ein Aufsteckverfahren für Ventilsäcke, mit einer Aufsteckeinrichtung wie oben beschrieben, das weiterhin die folgenden Schritte aufweist:
- Bewegen eines vereinzelten Sacks in eine Übergabeposition durch Bewegen der Greifeinrichtung, etwa Schwenken des Greifelements um 90°;
- Umschließen eines Sackendes mit Ventilöffnung durch den Führungskanal, indem ein schwenkbares Führungselement bewegt wird;
- Klemmendes Halten des Sacks durch Bewegen des Andrückelements;
- Aufschießen des Sacks auf einen Befüllstutzen.

Die Erfindung wird anhand eines Ausführungsbeispiels weiter erläutert, wobei auf eine Zeichnung Bezug genommen wird, in der:
Fig. 1 eine Draufsicht auf eine Aufsteckeinrichtung mit einer Vereinzelungsvorrichtung nach der vorliegenden Erfindung zeigt, und
Fig. 2.1 bis 2.3 eine Seitenansichten der in Fig. 1 dargestellten Aufsteckeinrichtung in verschiedenen Phasen eines erfindungsgemäßen Verfahrens zum Aufstecken eines Sackes auf einen Befüllstutzen zeigen.

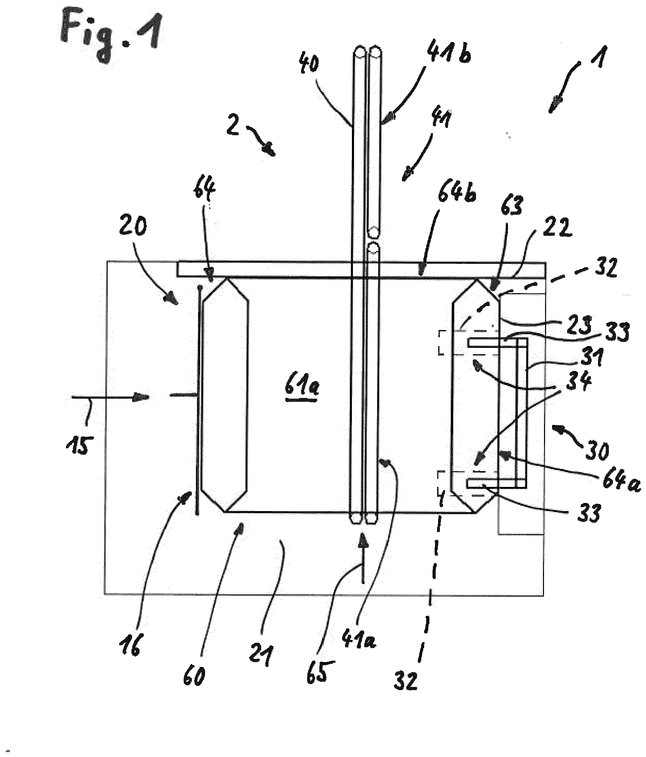

In Fig. 1 ist eine Ausführungsform der Aufsteckeinrichtung 2 dargestellt. Diese weist eine Vereinzelungsvorrichtung 1 und ein Transportelement 40 mit einem Andrückelement 41 auf, das aus einem schwenkbaren Andrückelement 41a und einem ortsfesten Andrückelement 41b besteht. Die Vereinzelungsvorrichtung 1 umfasst einen Vereinzelungsplatz 20 mit einer ebenen Auflagefläche 21 zur Aufnahme eines Stapels 60 von Ventilsäcken 61 und zwei Anschläge 22, 23, einen Positionieranschlag 22 und einen Stoppanschlag 23, zur Positionierung eines Stapels 60 von Ventilsäcken 61. In der dargestellten Ausführungsform liegen die Sackenden mit Ventilöffnung 63 mit einer entsprechenden ersten Seitenkante 64a am Stoppanschlag 23 an und mit der dazu rechtwinkligen zweiten Seitenkante 64b am Positionieranschlag 22. Eine Halteeinrichtung 30 weist ein Niederhalteelement 31 mit zwei als Niederhaltearme ausgebildeten Kontaktelementen 33 und zwei als Reibelemente ausgebildete Haftelemente 32 auf. Das Niederhalteelement 31 kann dabei mit den Kontaktelementen 33 genau oberhalb der Reibelemente 32 auf zwei Niederhaltebereiche 34 des obersten Sacks 61a des Stapels 60 drücken. Die Niederhaltebereiche 34 und die Haft- bzw. Reibelemente 32 liegen somit auf einer senkrecht zu der Auflagefläche 21 verlaufenden Geraden. So können alle Säcke des Stapels auf ihrer definierten Position auf der Auflagefläche 21 des Vereinzelungsplatzes 20 gehalten werden.

Die Vereinzelungsvorrichtung 1 umfasst weiterhin eine Zuführeinrichtung zum Zuführen eines Stapels 60 in einer Zuführrichtung 15 mit einem Schiebeelement 16, dessen Höhe über der Auflagefläche 21 mindestens gleich groß ist wie eine Höhe des zugeführten Stapels 60. Das Schiebeelement 16 kann bspw. durch ein senkrecht zur Auflagefläche 21 angeordnetes Blech oder durch mehrere parallel zueinander und in einer zur Auflagefläche 21 senkrechten Ebene angeordnete Stäbe gebildet sein.

Das Schiebeelement 16 ist in dem dargestellten Ausführungsbeispiel parallel zu dem Stoppanschlag 23 angeordnet, wobei die Zuführrichtung 15 senkrecht dazu und parallel zu dem Positionieranschlag 22 ist.

Die Greifeinrichtung 10 hat ein erstes Greifelement 10a in Form eines Sauggreifers, das an einem ersten Greifarm 12a gehalten ist. Das Greifelement 10a kann sich über die Länge des Sacks entlang der ersten Seitenkante 64a erstrecken. Weiterhin hat die Greifeinrichtung 10 ein zweites Greifelement 10b, bspw. ebenfalls in Form eines Sauggreifers, das an einem zweiten Greifarm 12b gehalten ist. Auch das Greifelement 10b kann sich über die Länge des Sacks entlang der zweiten Seitenkante 64b erstrecken.

Beim Anheben eines obersten Sackes 61a des Stapels 60 erfasst die Greifeinrichtung 10 mit dem ersten Greifelement 10a den Sack 61a an dem Sackende mit Ventilöffnung benachbart zu der ersten Seitenkante 64a und dem Stoppanschlag 23. In einer ersten Bewegungsphase bewegt sich der Greifer bzw. das erste Greifelement 10a parallel zur Auflagefläche 21 und zieht den Sack unter dem Niederhalteelement 31 heraus. Dabei kann sich eine Falte 36 in dem Sack bilden, wenn der Sack in seinem dem Anschlag 23 benachbarten Bereich in Richtung des Schiebeelements 16 verschoben wird. Die Falte kann entlang der Längsrichtung des Sackes, also in Längsrichtung des Transportelementes 40 verlaufen. Die Falte 36 kann sich in abgeschwächter Form auch in einem direkt darunterliegenden Sack oder mehreren darunterliegenden Säcken bilden.

Danach wird das erste Greifelement 10a wird beim Anheben um etwa 90° geschwenkt, so dass das Sackende 63 mit Ventilöffnung, das benachbart zu dem Stoppanschlag 23 gelegen hatte, in eine senkrecht nach oben weisende Position gebracht wird. Das zweite Greifelement 10b hebt das gegenüberliegende untere Sackende 64 an, wobei der Ventilsack um ein Abknickblech 51 gelegt und daran um 90° geknickt wird, so dass das dem Ventil gegenüberliegende Sackende 64 horizontal gehalten wird.

Die beiden Haftelemente 32 weisen eine Reibfläche auf, die einen hohen Reibungskoeffizienten in Bezug auf den auf ihr aufliegenden Sack aufweist. Das Niederhalteelement 31 übt während des Erfassungs- und Anhebevorgangs des obersten Ventilsacks eine Normalkraft auf den obersten Sack 61a des Stapels 60 aus, die über den Stapel 60 und einen untersten Sack 61b teilweise auf die Auflagefläche 21 und teilweise auf die Reibfläche der Haftelemente 32 übertragen wird, wo sie eine zusätzliche oder zusammen mit der Gewichtskraft des Stapels eine erhöhte Haftkraft bzw. Haftwirkung erzeugt.

Um den Stapel 60 trotz der Haftelemente möglichst leicht an seine Aufnahmeposition auf der Auflagefläche 21 in Anlage gegen die Anschläge 22, 23 zu befördern, sind die Haftelemente 32 am Ende der Zuführstrecke, insbesondere unmittelbar benachbart zu dem Stoppanschlag 23 angeordnet. Die Haftelemente können an- oder ausschaltbar sein, wobei sie bei Ausführung als Reibelemente in der Auflagefläche 21 versenkbar sein können, so dass sie nicht in Kontakt mit dem Stapel 60 kommen, wenn dieser in die Aufnahmeposition befördert wird. Nach Positionieren des Stapels in der Aufnahmeposition können die Haftelemente dann über die Auflagefläche 21 hochgefahren werden, um ihre Wirkung zu entfalten. Alternativ können die Haftelemente ortsfest angeordnet und bündig mit der Auflagefläche 21 sein oder darüber vorstehend angeordnet sein. Alternativ können die Haftelemente in den Bewegungsrichtungen 15 und 65 entgegengesetzt unterschiedliche Haftreibungskoeffizienten und/oder Oberflächenstrukturen aufweisen, beispielsweise Sägezahnprofil oder Riffelung. Dies bewirkt, dass die Haftreibung entgegen der Bewegungsrichtung 15 gezielt erhöht werden kann. Damit kann ein Verrutschen des Sackstapels bei der Vereinzelung verhindert werden.

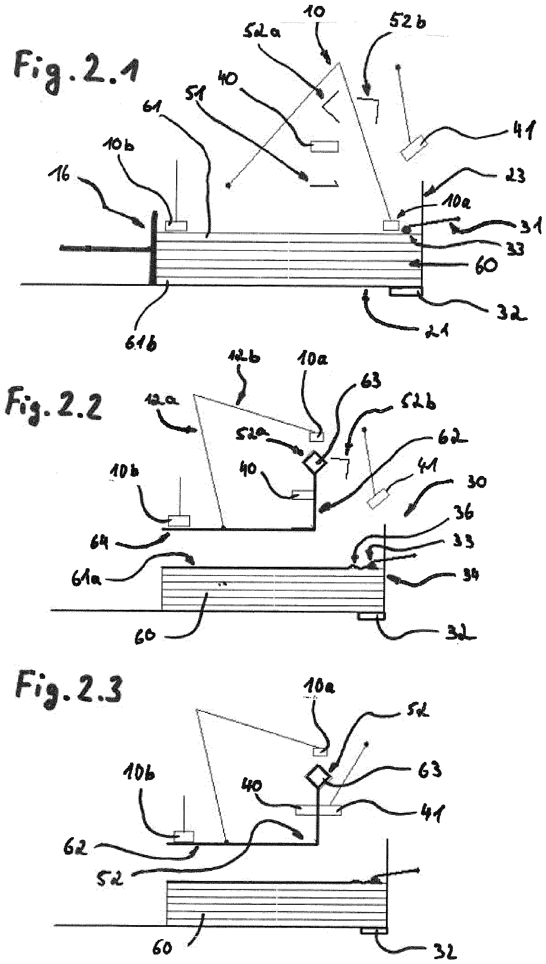

In Fig. 2.1 bis 2.3 sind drei Phasen des Aufsteckverfahrens der Säcke dargestellt. Fig. 2.1 zeigt die Vereinzelungsvorrichtung beim Anheben eines obersten Sackes 61a von einem Stapel 60 mit der Greifeinrichtung 10. Dabei sind Greifflächen der Greifeinrichtung in der Aufnahmeposition des obersten Sacks im Wesentlichen horizontal ausgerichtet, d.h. parallel zur Sackoberseite des obersten Sacks. Der Sackstapel 60 liegt auf der Auflagefläche 21 und ist zwischen den Kontaktelementen 33 des Niederhalteelements 31 und den Haftelementen 32 gewissermaßen eingeklemmt, wie oben beschrieben.

Fig. 2.2 zeigt, dass der vormalige oberste Sack 61a vereinzelt ist und sich in einer Übergabeposition befindet. Der vereinzelte Sack 61a wird durch das geöffnete Transportelement 40 in den Führungskanal 52 bewegt und dabei an dem Abknickelement 51 abgeknickt und um 90° abgewinkelt. Bei dem Abknickelement 51 kann es sich beispielsweise um ein Blech handeln. Aufgrund dieser Bewegung/dieses Abknickens wird der Sack gespannt und das Ventil dabei geöffnet.

In Fig. 2.3 ist die Vereinzelungsvorrichtung 1 nach dem Schließen des Andrückelements 41 gegen das Transportelement 40 und der Führungskanal 52 nach dem Schließen des zweiten Führungselements 52b gegen das erste Führungselement 52a dargestellt. Zum Schließen wurde der schwenkbare Andrückbereich 41a des Andrückelements 41 in Richtung des Transportelements 40 geschwenkt und ein zweites, schwenkbares Führungselement 52b in Richtung eines ersten, im normalen Maschinenbetrieb ortsfesten Führungselements 52a. In der Übergabeposition des vereinzelten Sacks durch die Greifeinrichtung 10 an die Aufsteckeinrichtung sind die Greifflächen im Wesentlichen horizontal ausgerichtet, d.h. parallel zur Sackoberseite des obersten Sacks.

Der vereinzelte Sack 62 ist nun am Transportelement 40 klemmend gehalten und befindet sich mit seinem vorderen Sackende 63 im Führungskanal.

Über ein Antriebssystem im Transportelement 40 oder im Andrückelement 41 wird der Sack beschleunigt. Dazu sind in an sich bekannter Weise am Transportelement 40 und am Andrückelement 41 Antriebsrollen oder umlaufende Gurte angebracht.

### Bezugszeichenliste

- 1: Vereinzelungsanlage
- 2: Aufsteckeinrichtung
- 10: Greifeinrichtung
- 10a: erstes Greifelement
- 10b: zweites Greifelement
- 12a: erster Greifarm
- 12b: zweiter Greifarm
- 15: Zuführrichtung
- 16: Schiebeelement (Zuführeinrichtung)
- 20: Vereinzelungsplatz
- 21: Auflagefläche
- 22: Positionieranschlag
- 23: Stoppanschlag
- 30: Halteeinrichtung
- 31: Niederhalteelement
- 32: Haftelement (Reibelement)
- 33: Kontaktelement (Niederhaltearm)
- 34: Niederhaltebereich
- 36: Falte
- 40: Transportelement
- 41: Andrückelement
- 41a: schwenkbares Andrückelement
- 41b: ortsfestes Andrückelement
- 51: Abknickblech
- 52: Führungskanal
- 52a: erstes Führungselement
- 52b: zweites Führungselement
- 60: Stapel
- 61: Ventilsack
- 61a: oberster Sack
- 61b: unterster Sack
- 62: vereinzelter Sack
- 63: oberes Sackende mit Ventilöffnung
- 64: unteres Sackende
- 64a: erste Seitenkante
- 64b: zweite Seitenkante
- 65: Bewegungsrichtung

## Patentansprüche

1. Vereinzelungsvorrichtung (1) zum Vereinzeln von ebenen, flexiblen Flächengebilden, insbesondere Ventilsäcken, von einem Stapel (60) von Flächengebilden (61), aufweisend
einen Vereinzelungsplatz (20) mit einer Auflagefläche (21) zur Aufnahme eines Stapels (60);
eine Greifeinrichtung (10) zum Erfassen eines obersten Flächengebildes (61) und Abheben von dem Stapel (60);
eine Halteeinrichtung mit einem Niederhalteelement (31), das mit einer vorgebbaren, gegen die Auflagefläche (21) gerichteten Niederhaltekraft gegen einen Niederhaltebereich einer Oberseite des obersten Flächengebildes (61a) bringbar ist, und mit einem Haftelement (32), das in einem dem Niederhalteelement (31) gegenüberliegenden Bereich der Auflagefläche (21) angeordnet ist, **dadurch gekennzeichnet, dass** das Haftelement (32) ausgebildet ist, um bei gegen das oberste Flächengebilde (61a) drückenden Niederhalteelement (31) eine zusätzliche Haftkraft auf eine Unterseite eines untersten, auf der Auflagefläche (21) aufliegenden Flächengebildes (61) auszuüben.

2. Vereinzelungsvorrichtung (1) nach Anspruch 1, wobei das Niederhalteelement (31) zumindest zwei Niederhaltearme (33) aufweist.

3. Vereinzelungsvorrichtung (1) nach einem der vorhergehenden Ansprüche, wobei der Sackstapel (60) mit Hilfe einer Zuführeinrichtung (16) in einer Zuführrichtung (15) auf die Auflagefläche (21) des Vereinzelungsplatzes (20) zuführbar ist.

4. Vereinzelungsvorrichtung (1) nach einem der vorhergehenden Ansprüche, wobei das zumindest eine Haftelement (32) ein Reibelement, etwa aus Gummi, Kork und/oder Kunststoff, oder ein stoffschlüssig in die Auflagefläche (21) integrierter Abschnitt mit einer Oberfläche mit einem hohem Reibungskoeffizienten in Bezug auf das Flächengebilde und/oder ein Saugelement ist.

5. Vereinzelungsvorrichtung (1) nach einem der vorhergehenden Ansprüche, wobei die Greifeinrichtung (10) mindestens ein Greifelement, etwa ein Saugelement, einen Klemmgreifer, einen Nadelgreifer oder einen elektrostatischen Aufnehmer, aufweist.

6. Aufsteckeinrichtung (2) für Ventilsäcke mit einer Vereinzelungsvorrichtung (1) nach einem der vorhergehenden Ansprüche, wobei die Aufsteckeinrichtung (2) ein Transportelement (40) mit einem relativ dazu bewegbaren Andrückelement (41) aufweist, wobei ein vereinzelter Ventilsack (62) in einer Übergabeposition durch Bewegen des Andrückelements (41) gegen das Transportelement (40) klemmend zu halten ist.

7. Aufsteckeinrichtung (2) nach Anspruch 6, wobei das Andrückelement (41) ein ortsfestes erstes Andrückelement (41b) und ein schwenkbares zweites Andrückelement (41a) aufweist, wobei das schwenkbare Andrückelement (41a) um eine Schwenkachse vom Transportelement (40) weg und auf das Transportelement (40) zu schwenkbar ist, um einen vereinzelten Ventilsack (62) klemmend zu halten.

8. Aufsteckeinrichtung (2) nach einem der Ansprüche 6 oder 7, weiterhin aufweisend einen Führungskanal (52) mit einem ersten Führungselement (52a) und einem zweiten Führungselement (52b), wobei ein Sackende eines Ventilsacks (61) mit einer Ventilöffnung (63) in der Übergabeposition von der Greifeinrichtung (10) im Führungskanal (52) positionierbar ist.

9. Aufsteckeinrichtung (2) nach Anspruch 8, wobei das zweite Führungselement (52b) schwenkbar gelagert ist, wobei das Sackende mit Ventilöffnung (63) durch Schwenken des zweiten Führungselements (52b) im Führungskanal (52) einschließbar ist, wobei das Sackende mit Ventilöffnung (63) im Führungskanal (52) entfaltbar ist und der vom Führungskanal (52) eingeschlossene Sack entlang der Längsachse des Führungskanals (52) bewegbar ist.

10. Aufsteckeinrichtung (2) nach einem der Ansprüche 6 bis 9, wobei mindestens eine, insbesondere zwei Greifflächen des Greifers in der Aufnahmeposition des obersten Sacks auf dem Stapel und in der Übergabeposition an die Aufsteckeinrichtung horizontal und parallel zu einer Oberseite des Sacks angeordnet sind.

11. Verfahren zum Vereinzeln von Flächengebilden mittels einer Vereinzelungsvorrichtung (1) nach einem der Ansprüche 1 bis 5, aufweisend die folgenden Schritte:
a) Positionieren eines Stapels (60) von Flächengebilden (61) in einer Aufnahmeposition auf der Auflagefläche (21);
b) Aufbringen der Niederhaltekraft zwischen dem Niederhalteelement (31), der Auflagefläche (21) und dem Haftelement (32) durch Bewegen des Niederhalteelements (31) gegen den Niederhaltebereich;
c) Erfassen des obersten Flächengebildes (61a) und Abheben von dem Stapel (60).

12. Verfahren nach Anspruch 11, wobei die Flächengebilde Ventilsäcke (61) sind, mittels einer Aufsteckeinrichtung nach Anspruch 8 mit den folgenden Schritten:
d) Bewegen eines vereinzelten Ventilsacks (62) in eine Übergabeposition durch Bewegen der Greifeinrichtung (10), etwa Schwenken des Greifelements um 90°;
e) Umschließen eines Sackendes mit Ventilöffnung (63) mit dem Führungskanal (52) durch Bewegen des zweiten Führungselements (52b);
f) Klemmendes Halten des Sacks durch Bewegen des Andrückelements (41);
g) Aufschießen des Sacks auf einen Befüllstutzen.

## Claims

1. A separation device (1) for separating flat, flexible sheet-like items, in particular valve bags, from a stack (60) of sheet-like items (61), having
a separation location (20) with a bearing surface (21) for receiving a stack (60);
a gripping means (10) for grasping an uppermost sheet-like item (61) and lifting off from the stack (60);
a holding means with a hold-down element (31) which can be brought, with a specifiable hold-down force directed against the bearing surface (21), against a hold-down region of an upper side of the uppermost sheet-like item (61a), and with a retaining element (32) which is arranged in a region of the bearing surface (21) located opposite the hold-down element (31), **characterised in that** the retaining element (32) is designed in order, when the hold-down element (31) is pressing against the uppermost sheet-like item (61a), to exert an additional retaining force on an underside of a lowermost sheet-like item (61) lying on the bearing surface (21).

2. A separation device (1) according to claim 1, wherein the hold-down element (31) has at least two hold-down arms (33).

3. A separation device (1) according to one of the preceding claims, wherein the stack of bags (60) can be supplied onto the bearing surface (21) of the separation location (20) in a supply direction (15) with the aid of a supply means (16).

4. A separation device (1) according to one of the preceding claims, wherein the at least one retaining element (32) is a friction element, for instance made of rubber, cork and/or plastics material, or a portion, integrated by a material-formed bond in the bearing surface (21), with a surface with a high coefficient of friction in relation to the sheet-like item, and/or a suction element.

5. A separation device (1) according to one of the preceding claims, wherein the gripping means (10) has at least one gripping element, for instance a suction element, a clamping gripper, a needle gripper or an electrostatic pick-up means.

6. A placing means (2) for valve bags with a separation device (1) according to one of the preceding claims, wherein the placing means (2) has a transportation element (40) with a pressure application element (41) movable relative thereto, wherein a separated valve bag (62) in a transfer position is to be held in a clamping manner by moving the pressure application element (41) against the transportation element (40).

7. A placing means (2) according to claim 6, wherein the pressure application element (41) has a fixed first pressure application element (41b) and a pivotable second pressure application element (41a), wherein the pivotable pressure application element (41a) can be pivoted about a pivot axis away from the transportation element (40) and towards the transportation element (40), in order to hold a separated valve bag (62) in a clamping manner.

8. A placing means (2) according to any one of claims 6 or 7, furthermore having a guide channel (52) with a first guide element (52a) and a second guide element (52b), wherein a bag end of a valve bag (61) with a valve opening (63) can be positioned in the guide channel (52) in the transfer position by the gripping means (10).

9. A placing means (2) according to claim 8, wherein the second guide element (52b) is pivotably mounted, wherein the bag end with valve opening (63) can be enclosed in the guide channel (52) by pivoting the second guide element (52b), wherein the bag end with valve opening (63) can be unfolded in the guide channel (52) and the bag enclosed by the guide channel (52) is movable along the longitudinal axis of the guide channel (52).

10. A placing means (2) according to one of claims 6 to 9, wherein at least one, in particular two, gripping faces of the gripper in the receiving position of the uppermost bag on the stack and in the transfer position to the placing means are arranged horizontally and parallel to an upper side of the bag.

11. A method for separating sheet-like items by means of a separation device (1) according to one of claims 1 to 5, having the following steps:
a) positioning a stack (60) of sheet-like items (61) in a receiving position on the bearing surface (21);
b) applying the hold-down force between the hold-down element (31), the bearing surface (21) and the retaining element (32) by moving the hold-down element (31) against the hold-down region;
c) grasping the uppermost sheet-like item (61a) and lifting off from the stack (60).

12. A method according to Claim 11, wherein the sheet-like items are valve bags (61), by means of a placing means according to claim 8, having the following steps:
d) moving a separated valve bag (62) into a transfer position by moving the gripping means (10), for instance pivoting the gripping element by 90°;
e) enclosing a bag end with valve opening (63) with the guide channel (52) by moving the second guide element (52b);
f) clamping holding of the bag by moving the pressure application element (41);
g) docking the bag on a filling spout.

## Revendications

1. Dispositif séparateur (1) pour la séparation d'articles stratiformes souples et plats, notamment des sacs à valve, d'une pile (60) d'articles stratiformes (61) possédant
un emplacement de séparation (20) avec une surface portante (21) pour recevoir une pile (60) ;
un organe de préhension (10) pour saisir un article stratiforme (61) supérieur et le soulever hors de la pile (60) ;
un organe de retenue doté d'un élément de maintien (31), pouvant être amené, avec une force de maintien spécifiable dirigée contre la surface portante (21), contre une zone de maintien d'un côté supérieur de l'article stratiforme supérieur (61a), et d'un élément de retenue (32) agencé dans une zone de la surface portante (21) située face à l'élément de maintien (31), **caractérisé en ce que** l'élément de retenue (32) est conçu afin d'exercer une force de retenue additionnelle sur une face inférieure d'un article stratiforme (61) inférieur couché sur la surface portante (21) lorsque l'élément de maintien (31) fait pression contre l'article stratiforme supérieur (61a).

2. Dispositif séparateur (1) selon la revendication 1, l'élément de maintien (31) possédant au moins deux bras de maintien (33).

3. Dispositif séparateur (1) selon une quelconque des revendications précédentes, la pile de sacs (60) pouvant être fournie sur la surface portante (21) de l'emplacement de séparation (20) dans une direction de distribution (15) à l'aide d'un dispositif de distribution (16).

4. Dispositif séparateur (1) selon une quelconque des revendications précédentes, l'au moins un élément de retenue (32) étant un élément à friction, réalisé par exemple en caoutchouc, en liège et/ou en matière plastique, ou une partie, intégrée par une liaison matérielle dans la surface portante (21), avec une surface présentant un coefficient de friction élevé relativement à l'article stratiforme, et/ou un élément d'aspiration.

5. Dispositif séparateur (1) selon une quelconque des revendications précédentes, l'organe de préhension (10) possédant au moins un élément de préhension, par exemple un élément à ventouse, une griffe de serrage, une griffe à aiguilles, ou un dispositif de préhension électrostatique.

6. Dispositif de placement (2) pour sacs à valve avec un dispositif séparateur (1) selon une des revendications précédentes, le dispositif de placement (2) possédant un élément de transport (40) avec un élément d'application de la pression (41) mobile relativement à celui-ci, un sac à valve séparé (62) dans une position de transfert devant être tenu par serrage en déplaçant l'élément d'application de la pression (41) contre l'élément de transport (40).

7. Dispositif de placement (2) selon la revendication 6, l'élément d'application de la pression (41) possédant un premier élément d'application de la pression fixe (41b) et un deuxième élément d'application de la pression pivotant (41a), l'élément d'application de la pression pivotant (41a) pouvant pivoter autour d'un axe de pivotement dans le sens opposé à l'élément de transport (40) et vers l'élément de transport (40), afin de tenir un sac à valve séparé (62) par serrage.

8. Dispositif de placement (2) selon une quelconque des revendications 6 ou 7, possédant en outre une rainure de guidage (52) avec un premier élément de guidage (52a) et un deuxième élément de guidage (52b), un côté de sac d'un sac à valve (61) avec une ouverture de valve (63) pouvant être positionné dans la rainure de guidage (52), dans la position de transfert, par l'organe de préhension (10).

9. Dispositif de placement (2) selon la revendication 8, le deuxième élément de guidage (52b) étant monté par pivotement, l'extrémité du sac avec une ouverture de valve (63) pouvant être renfermée dans la rainure de guidage (52) en pivotant le deuxième élément de guidage (52b), l'extrémité du sac avec une ouverture de valve (63) pouvant être dépliée dans la rainure de guidage (52), et le sac contenu dans la rainure de guidage (52) pouvant être déplacé le long de l'axe longitudinal de la rainure de guidage (52).

10. Dispositif de placement (2) selon une des revendications 6 à 9, au moins une, en particulier deux, faces de préhension de la griffe dans la position de réception du sac supérieur sur la pile et dans la position de transfert vers le dispositif de placement étant agencées horizontalement et parallèlement à un côté supérieur du sac.

11. Méthode de séparation d'articles stratiformes à l'aide d'un dispositif séparateur (1) selon une quelconque des revendications 1 à 5, comprenant les étapes suivantes :
a) positionnement d'une pile (60) d'articles stratiformes (61) dans une position de réception sur la surface portante (21) ;
b) application de la force de maintien entre l'élément de maintien (31), la surface portante (21) et l'élément de retenue (32) en déplaçant l'élément de maintien (31) contre la zone de maintien ;
c) saisie de l'article stratiforme supérieur (61a) et soulèvement de celui-ci hors de la pile (60).

12. Méthode selon la revendication 11, les articles stratiformes étant des sacs à valve (61), à l'aide d'un dispositif de placement selon la revendication 8, comprenant les étapes suivantes :
d) déplacer un sac à valve séparé (62) dans une position de transfert, en déplaçant l'organe de préhension (10), par exemple en pivotant l'élément de préhension de 90° ;
e) incorporer un côté de sac avec ouverture de valve (63) dans la rainure de guidage (52) en déplaçant le deuxième élément de guidage (52b) ;
f) retenir fermement le sac en déplaçant l'élément d'application de la pression (41) ;
g) maintenir le sac sur une goulotte de remplissage.
